# EUROPÄISCHE PATENTSCHRIFT

(11) **EP 3 475 755 B1**
(45) Veröffentlichungstag und Bekanntmachung des Hinweises auf die Patenterteilung: **17.11.2021**
(21) Anmeldenummer: 17732894.5
(22) Anmeldetag: 26.06.2017
(51) Int. Cl.: G02B 27/01, G02B 27/00

(54) **ANZEIGEVORRICHTUNG ZUR EINBLENDUNG EINES VIRTUELLEN BILDES IN DAS BLICKFELD EINES BENUTZERS**
DISPLAY PROJECTING A VIRTUAL IMAGE INTO THE FIELD OF VIEW OF A USER
DISPOSITIF D'AFFICHAGE POUR PROJETER UN IMAGE VIRTUEL DANS LE CHAMP DE VISION D'UN UTILISATEUR

(30) Priorität: 28.06.2016 DE 102016111783
(43) Veröffentlichungstag der Anmeldung: 01.05.2019
(73) Patentinhaber: Hologram Industries Research GmbH, 85652 Ottersberg/Pliening (DE)
(72) Erfinder: DAUSMANN, Günther, 85630 Grasbrunn (DE)
(74) Vertreter: Grünecker Patent- und Rechtsanwälte PartG mbB
(86) Internationale Anmeldenummer: PCT/EP2017/065616
(87) Internationale Veröffentlichungsnummer: WO 2018/001917

(56) Entgegenhaltungen:
- EP-A1- 1 006 375
- WO-A2-2005/028256
- US-A1- 2007 064 311
- US-A1- 2014 198 262
- US-B1- 6 353 422
- US-B2- 7 391 574

## Beschreibung

Die vorliegende Erfindung betrifft eine Anzeigevorrichtung zur Einblendung eines virtuellen Bildes in das Blickfeld eines Benutzers der Anzeigevorrichtung nach dem Oberbegriff der unabhängigen Ansprüche 1 und 2.

Eine gattungsgemäße Anzeigevorrichtung umfasst eine Brille für den Benutzer und zumindest eine Projektionseinrichtung zur Erzeugung von Lichtstrahlen, die mittels einer Optik der Brille in einen Strahlengang überführt werden, der das virtuelle Bild für den Benutzer erzeugt.

Eine derartige Anzeigevorrichtung ist aus dem Stand der Technik zum Beispiel aus US6353422-B1 bekannt. Ein weiteres Beispiel ist das von der Firma Google entwickelte und unter dem Markennamen Google Glass vertriebene Gerät, welches eine Anzeigevorrichtung nach dem Oberbegriff des unabhängigen Anspruchs 1 darstellt.

Das Gerät besteht im Wesentlichen aus einer herkömmlichen Brille, die auf einer Seite einen relativ breiten Bügel aufweist, in den ein Computer mit der Rechenleistung eines Mittelklasse-Smartphone integriert ist. Die Bildausgabe erfolgt durch einen kleinen Projektor, der ebenfalls in den Bügel integriert ist, und dessen Bild mittels eines Prismas in das rechte Auge des Benutzers eingespiegelt wird. Das Prisma ist vor dem rechten Glas der Brille angeordnet und deckt lediglich einen geringen Bereich des Blickfeldes ab. Das eingeblendete virtuelle Bild, das von dem Projektor erzeugt wird, kann daher nur in einem kleinen Bereich des Blickfeldes dargestellt werden. Zudem stört das relativ dicke Prisma vor dem rechten Glas der Brille die Ästhetik und kann zudem vom Benutzer als störend empfunden werden. Das Prisma lässt zwar das Licht der Umgebung durch, sodass der Benutzer das Bild der Realität auch im Bereich des Prismas weiterhin sehen kann. Durch das Prisma kommt es jedoch zu Abbildungsfehlern.

Ferner sind aus dem Stand der Technik sogenannte Virtual-Reality-Brillen bekannt, die das Bild der Umgebung mit einer Kamera aufnehmen, mit einem virtuellen Bild kombinieren, und das kombinierte Bild mittels einer Projektionsvorrichtung für den Benutzer darstellen. Bei diesen Geräten handelt es sich jedoch nicht um Brillen im eigentlichen Sinn, da der Benutzer kein transparentes Glas vor Augen hat und das Bild der Umgebung somit nur bei eingeschalteter Projektionsvorrichtung sieht. Aufgrund eines möglichen Ausfalls der Projektionsvorrichtung, beispielsweise durch eine Stromunterbrechung, sind derartige Systeme daher nicht für Anwendungen geeignet, bei welchen der Benutzer aus sicherheitstechnischen Gründen seine Umgebung stets wahrnehmen können muss.

Aus dem Stand der Technik sind ferner Anzeigevorrichtungen zur Einblendung eines virtuellen Bildes bekannt, die ohne eine Brille für den Benutzer auskommen. Derartige Anzeigevorrichtungen werden beispielsweise im Automobilbereich als sogenannte Head-up-Displays eingesetzt, um dem Fahrer zusätzliche Informationen, beispielsweise über die momentane Geschwindigkeit des Fahrzeugs, direkt in sein Blickfeld einzublenden, ohne dass der Fahrer hierfür den Blick von der Straße abwenden muss. Derartige Anzeigevorrichtungen sind beispielsweise in US 7391574 B2, EP 1006375 A1,

DE 2304175 A, DE 4445555C2, DE 102005012011 A1, DE 102008024060 A1 und DE 102011075205 A1 beschrieben. Die bekannten Head-up-Displays haben unter anderem den Nachteil, dass der Bereich, in dem das virtuelle Bild für den Benutzer dargestellt werden kann, lediglich einen geringen Teil des Blickfeldes einnimmt.

Aufgabe der vorliegenden Erfindung ist es, die Anzeigevorrichtung der gattungsgemäßen Art derart weiterzubilden, dass das virtuelle Bild in einem großen Bereich des Blickfeldes dargestellt werden kann und sich dabei keine störenden Seeeindrücke für den Benutzer ergeben.

Die Aufgabe wird gelöst durch die Merkmale des unabhängigen Anspruchs 1. Demnach liegt bei einer Anzeigevorrichtung der gattungsgemäßen Art dann eine erfindungsgemäße Lösung der Aufgabe vor, wenn die Optik eine Mattscheibe und eine holographische Abbildungsoptik umfasst, wobei Mattscheibe und holographische Abbildungsoptik derart angeordnet sind, dass die von der Projektionseinrichtung erzeugten Lichtstrahlen durch die Mattscheibe hindurch auf die holographische Abbildungsoptik treffen und von dieser in den Strahlengang überführt werden, der das virtuelle Bild für den Benutzer erzeugt. Alternativ wird die Aufgabe durch die Merkmale des unabhängigen Anspruchs 2 gelöst. Demnach liegt bei einer Anzeigevorrichtung der gattungsgemäßen Art auch dann eine erfindungsgemäße Lösung der Aufgabe vor, wenn die Optik vorzugsweise ein Linsenarray aus Mikrolinsen und eine holographische Abbildungsoptik umfasst, wobei Linsenarray und holographische Abbildungsoptik derart angeordnet sind, dass die von der Projektionseinrichtung erzeugten Lichtstrahlen durch das Linsenarray hindurch auf die holographische Abbildungsoptik treffen und von dieser in den Strahlengang überführt werden, der das virtuelle Bild für den Benutzer erzeugt. Bei dieser erfindungsgemäßen Lösung wird von der Projektionseinrichtung ein Bild direkt auf dem Linsenarray erzeugt. Bei dem Linsenarray kann es sich sowohl um ein Zerstreuungslinsenarray als auch um ein Sammellinsenarray handeln.

Sowohl die Mattscheibe beziehungsweise das Linsenarray als auch die holographische Abbildungsoptik können auf völlig unauffällige Weise an der Brille angebracht sein. Die Optik, die das virtuelle Bild für den Benutzer erzeugt, ist somit unauffällig und wird weder vom Benutzer selbst noch von dritten Personen als störend empfunden. Die holographische Abbildungsoptik kann als Beschichtung auf das Brillenglas aufgebracht sein. Sofern je eine holographische Abbildungsoptik pro Brillenglas und je eine Mattscheibe beziehungsweise ein Linsenarray pro Auge vorgesehen sind, kann dem Benutzer ein virtuelles Stereobild in sein Blickfeld eingeblendet werden. Aufgrund der Anordnung der holographischen Abbildungsoptik nahe vor dem Auge des Benutzers ergibt sich in Bezug auf die Darstellung des virtuellen Bildes ein besonders großes Blickfeld des Benutzers. Im Gegensatz zu bestehenden Systemen, bei welchen die Umgebung mit einer Kamera aufgenommen und, kombiniert mit dem virtuellen Bild, für den Benutzer nur bei eingeschalteter Projektionsvorrichtung sichtbar ist, bleibt die Umgebung bei der erfindungsgemäßen Anzeigevorrichtung stets sichtbar. Die holographische Abbildungsoptik ist transparent und ist in der nullten Ordnung nicht aktiv. Sie ermöglicht dem Benutzer daher eine ungehinderte und direkte Wahrnehmung seiner Umgebung. Die holographische Abbildungsoptik ist vorzugsweise ein dünnes flächiges Element, das weiter vorzugsweise lediglich einige Mikrometer dick und als Beschichtung bzw. Film auf das Glas der Brille aufgebracht ist. Die holographische Abbildungsoptik kann mehrere holographische Schichten umfassen. Ferner können die holographische Abbildungsoptik bzw. deren Schichten jeweils auf eine bestimmte Wellenlänge optimiert sein. Als Glas kommt grundsätzlich jeder geeignete transparente Träger für die holographische Abbildungsoptik in Betracht. Es wird insbesondere darauf hingewiesen, dass es sich bei dem Glas nicht unbedingt um ein mineralisches Glas sondern beispielsweise auch um ein Kunststoffglas handeln kann. Die Mattscheibe bzw. das Linsenarray ist vorzugsweise ebenfalls als dünnes flächiges Element ausgeführt. Mattscheibe und Linsenarray können auch miteinander kombiniert werden. Das Linsenarray kann auch durch ein Hologramm realisiert sein. Vorteilhafte Ausführungsformen der vorliegenden Erfindung sind Gegenstand der Unteransprüche.

In einer bevorzugten Ausführungsform der vorliegenden Erfindung ist die Mattscheibe beziehungsweise das Linsenarray bei aufrechter Kopfhaltung des Benutzers im Wesentlichen horizontal ausgerichtet. Diese Ausführungsform bietet vor allem den Vorteil, dass die Mattscheibe bzw. das Linsenarray das Blickfeld des Benutzers nicht stört. Ferner ergibt sich der Vorteil, dass die Mattscheibe auf einfache Weise von oben beleuchtet werden kann. Auch bei Verwendung eines Linsenarrays kann die Projektionseinrichtung oberhalb des Benutzers angeordnet sein, um das Bild auf dem Linsenarray zu erzeugen. Vorzugsweise ist die Mattscheibe beziehungsweise das Linsenarray im Wesentlichen parallel zur Sehachse ausgerichtet, so dass sie für den Benutzer kaum oder nicht sichtbar ist. Weiter vorteilhaft ist in diesem Zusammenhang, dass entsprechend der Erfindung die Mattscheibe beziehungsweise das Linsenarray im oberen Bereich der Brille angeordnet ist, so dass sich die Mattscheibe beziehungsweise das Linsenarray am oberen Ende des Blickfelds des Benutzers befindet.

Entsprechend der vorliegenden Erfindung schließt die Mattscheibe beziehungsweise das Linsenarray zu einer Ebene der holographischen Abbildungsoptik einen Winkel von zumindest 45° ein. Vorzugsweise kann der Winkel zumindest 60° bis 90° betragen.

In einer weiteren Ausführungsform der vorliegenden Erfindung weist die holographische Abbildungsoptik ein Reflexionshologramm auf und ist derart angeordnet, dass die Lichtstrahlen durch die Mattscheibe beziehungsweise das Linsenarray hindurch auf die holographische Abbildungsoptik treffen und von dieser reflektiert und dabei in den Strahlengang überführt werden, der das virtuelle Bild für den Benutzer erzeugt. Die holographische Abbildungsoptik hat dabei die optische Funktion einer Lupe. Die holographische Abbildungsoptik liegt bei dieser Ausführungsform vorzugsweise in einer Ebene, die zur Sehachse des Benutzers einen Winkel von etwa 45° einschließt. Die holographische Abbildungsoptik kann dabei entweder auf ein Brillenglas aufgebracht sein, dass zur Sehachse den erforderlichen Winkel von etwa 45° einschließt. Selbst verständlich ist es auch möglich, zusätzlich zu einem normal ausgerichteten Brillenglas ein zusätzliches Glas oder eine transparente Scheibe vorzusehen, auf welche die holographische Abbildungsoptik aufgebracht ist. Gemäß einer besonders bevorzugten Weiterbildung dieser Ausführungsform ist die Mattscheibe als holographische Mattscheibe mit Vorzugslichtaustrittsrichtung ausgeführt. Bei dieser bevorzugten Weiterbildung ergibt sich im Vergleich zur Verwendung einer einfachen Mattscheibe eine deutliche Wirkungsgradverbesserung.

In einer alternativen Ausführungsform der vorliegenden Erfindung weist die holographische Abbildungsoptik ein Transmissionshologramm auf, wobei die Mattscheibe eine holographische Mattscheibe mit Vorzugslichtaustrittsrichtung ist, sodass die Lichtstrahlen von der Mattscheibe überwiegend auf die holographische Abbildungsoptik gelenkt werden. Bei dieser Ausführungsform ist es nicht notwendig, ein zusätzliches Glas oder eine zusätzliche transparente Scheibe im 45° Winkel zur Sehachse des Benutzers vorzusehen. Die holographische Abbildungsoptik kann bei dieser Ausführungsform auf besonders unauffällige Weise auf ein normal ausgerichtetes Brillenglas aufgebracht werden. Das Transmissionshologramm weist vorzugsweise zumindest ein monochromes Transmissionshologramm auf. Besonders bevorzugt weist die holographische Abbildungsoptik zumindest drei monochrome Transmissionshologramme für Licht unterschiedlicher Wellenlänge auf, wobei die zumindest drei monochromen Transmissionshologramme hintereinander oder ineinander angeordnet sind. Die unterschiedlichen Transmissionshologramme können beispielsweise für jeweils eine der Farben rot, grün und blau und gegebenenfalls eine weitere Farbe ausgelegt sein. Die Projektionseinrichtung muss dazu derart ausgeführt sein, dass sie Licht der zugehörigen Wellenlängen erzeugt. Eine weitere Wirkungsgradverbesserung und somit eine besonders deutliche Darstellung des virtuellen Bildes ergeben sich, wenn das Transmissionshologramm bzw. die Transmissionshologramme als Lasertransmissionshologramm ausgeführt sind. Alternativ ist auch die Verwendung eines ordinären Laserlichttransmissionshologramms möglich.

In einer weiteren besonders bevorzugten Ausführungsform der vorliegenden Erfindung ist die Projektionseinrichtung unabhängig von der Brille als externer Beamer ausgeführt. Diese Ausführungsform bietet den Vorteil, dass die Brille äußerst leicht und dadurch angenehm für den Benutzer ist. Die Elektronik für die Berechnung der Bildinformationen kann ebenfalls vollständig extern untergebracht sein. Zur Erzeugung eines Stereobilds können entweder zwei Beamer vorgesehen sein oder es wird ein Beamer verwendet, der zwei Bilder nebeneinander darstellen kann. Mit dem ersten Bild wird beispielsweise die Mattscheibe auf der linken Seite der Brille und mit dem zweiten Bild die Mattscheibe auf der rechten Seite der Brille beleuchtet. Bei Verwendung eines Linsenarrays wird der Beamer so eingerichtet, dass das Bild des Beamers auf dem Array erzeugt wird. Vorzugsweise ist der Beamer als Laserbeamer ausgeführt. Dadurch wird ein hoher Wirkungsgrad erreicht und das virtuelle Bild erreicht eine besonders hohe Farbtiefe. Die Ausführungsform mit Beamer bietet sich überall dort an, wo der Benutzer ohnehin nur eine eingeschränkte Bewegungsfreiheit besitzt. Beispielsweise kann diese Ausführungsform im Automobilbereich zum Einsatz kommen. Der Beamer kann zum Beispiel in den Dachhimmel eines Kraftfahrzeugs integriert sein. Bei Verwendung eines einzigen Beamers bzw. Stereobeamerpaars ergibt sich eine Bewegungsfreiheit von etwa 180° bezogen auf eine Kopfdrehung um die Hochachse. Größere Bewegungsfreiheiten können durch Verwendung mehrerer Beamer ermöglicht werden, die in Abhängigkeit von Position und Ausrichtung der Brille zum Einsatz kommen.

Gemäß einer weiteren bevorzugten Ausführungsform der vorliegenden Erfindung weist die Anzeigevorrichtung einen Tracker zur Erfassung von Position und Ausrichtung der Brille auf, wobei die Anzeigevorrichtung derart eingerichtet ist, dass sich das vom Beamer erzeugte Bild in Abhängigkeit der Position und Ausrichtung der Brille ändert. Dabei ist ein Passivtracking der Brillenposition und Brillenausrichtung möglich. Die Brille wird dadurch besonders leicht. Alternativ können selbstverständlich entsprechende Bewegungssensoren in der Brille untergebracht sein, um die Position und Ausrichtung der Brille zu erfassen.

Gemäß einer weiteren besonders bevorzugten Ausführungsform der vorliegenden Erfindung ist die Anzeigevorrichtung derart eingerichtet ist, dass ein vorzugsweise auf die Mattscheibe beziehungsweise das Linsenarray begrenzter Bildausschnitt des Beamers mit der Mattscheibe beziehungsweise dem Linsenarray mitwandert. Dadurch wird verhindert, dass der Beamer Flächen oder Bereiche beleuchtet, deren Beleuchtung entweder vom Benutzer selbst oder von weiteren Personen als störend empfunden wird. Insbesondere werden dadurch ungewollte Blendeffekte vermieden. Sofern die Position und Ausrichtung der Brille nicht getrackt wird, muss der Beamer einen größeren Bereich abdecken, sodass sich die Mattscheibe bzw. das Linsenarray bei kleineren Positionsänderungen des Benutzers stets im beleuchteten Bereich befindet.

Gemäß einer vorteilhaften Ausführungsform weist der Tracker eine Kamera auf, wobei die Brille mit Referenzpunkten versehen ist, die von der Kamera erfassbar sind. Um die Erfassung der Position und Ausrichtung der Brille auch im Dunkeln zu ermöglichen, können die Referenzpunkte durch Leuchtdioden gebildet werden. In diesem Fall ist eine völlig passive Ausführung der Brille nicht möglich, da zumindest für die Leuchtdioden eine Stromquelle vorgesehen werden muss. Alternativ können die Referenzpunkte auch mit einem phosphoreszierenden Stoff beschichtet sein.

Bei Verwendung einer Mattscheibe kann die Projektionseinrichtung gemäß einer weiteren Ausführungsform der vorliegenden Erfindung ein LCD-Display aufweisen, das vorzugsweise direkt über der Mattscheibe angeordnet und fest mit der Brille verbunden ist. Zur Erzeugung stereotropischer virtueller Bilder kann selbstverständlich jeweils ein LCD-Display pro Auge bzw. Mattscheibe vorgesehen sein. Diese Ausführungsform bietet den Vorteil, dass der Bewegungsfreiheit im Prinzip keine Grenzen gesetzt sind. Sowohl ein Rundumblick um 360° als auch Blickwinkeländerungen nach unten und oben sind bei dieser Ausführungsform möglich. Auch bei dieser Ausführungsform ist kein Augentracking erforderlich. Lediglich die Position und Ausrichtung der Brille muss erfasst werden. Wie bereits weiter oben beschrieben, kann hierzu entweder eine Kamera zum Einsatz kommen, mittels der Referenzpunkte auf der Brille erfasst werden. Alternativ ist es möglich, die Position und Ausrichtung der Brille mittels geeigneter Sensoren zu erfassen, die in der Brille selbst untergebracht sind.

Das LCD Display kann auf verschiedene Weise hinterleuchtet werden. Vorzugsweise kommen dazu schmalbandige LEDs oder Laserlichtquellen zum Einsatz. In beiden Fällen kann die Bildinformation beispielsweise durch die Grundfarben Rot, Grün, Blau und gegebenenfalls eine weitere Farbe zusammengesetzt werden. Die holographische Abbildungsoptik wird für die entsprechenden Wellenlängen der genannten Farben ausgelegt. Die gegenüber Laserlichtquellen etwas günstigeren LEDs bieten vor allen Dingen einen gewissen Kostenvorteil. Mit Laserlichtquellen lässt sich eine bessere Farbtiefe realisieren. Eine weitere Möglichkeit der Hinterleuchtung des LCD Displays stellt die Verwendung von organischen Leuchtdioden dar. Falls die Brille besonders leicht sein soll, ist es auch denkbar, eine unabhängig von der Brille vorgesehene, externe Beleuchtung für das LCD-Display vorzusehen. Vorzugsweise kommt hierzu ein Laser zum Einsatz. Ähnlich wie bei der bereits weiter oben beschriebenen Ausführungsform mit einem Beamer kann die externe Beleuchtung derart eingerichtet sein, dass der beleuchtete Bereich mit der Mattscheibe bzw. dem LCD-Display mitwandert. Selbstverständlich müssen hierzu die Position und Ausrichtung der Brille erfasst werden. Im beleuchteten Bereich der Brille kann vorteilhafter Weise auch eine Photovoltaik-Zelle angeordnet sein, über die Akkus für den Betrieb des LCD Displays aufgeladen werden können. Das LCD Display kann alternativ auch kabelgebunden mit Strom versorgt werden. Hierzu ist es notwendig, die Brille mit einer Stromleitung an eine externe Versorgung anzuschließen. Es kann auch eine kombinierte Daten- und Stromleitung vorgesehen sein, sodass in der Brille weder ein Funkempfänger noch eine Recheneinheit zur Berechnung der Bildinformationen vorgesehen sein muss. Die Brille ist in diesem Fall trotz LCD-Display besonders leicht und daher angenehm zu tragen.

In einer weiteren besonders bevorzugten Ausführungsform der vorliegenden Erfindung umfasst die Anzeigevorrichtung eine Kamera oder eine geeignete alternative Bildaufnahmevorrichtung, deren Bild in bearbeiteter oder unbearbeiteter Form als virtuelles Bild in das Blickfeld des Benutzers einblendbar ist, wobei die Kamera vorzugsweise als Stereokamera ausgeführt ist. Die Kamera ist in der Regel extern vorgesehen. Aus dem Bild der Stereo-Kamera kann ein stereoskopisches Bild aus dem Blickwinkel des Benutzers berechnet und dem realen Seheindruck passgenau überlagert werden. Dies kann insbesondere dann von Vorteil sein, wenn durch die Kamera oder eine geeignete alternative Bildaufnahmevorrichtung Details der Realität aufgenommen werden, die für den Benutzer nicht direkt wahrnehmbar sind, da sie zum Beispiel von anderen Objekten verdeckt sind. Der Begriff Bildaufnahmevorrichtung ist in diesem Zusammenhang breit zu interpretieren. Beispielsweise ist es denkbar, einem Chirurgen eine dreidimensionale Darstellung bestimmter Gewebepartien oder Gefäße als virtuelles Bild in sein direktes Blickfeld einzublenden. Als Bildaufnahmevorrichtung kann in diesem Fall ein entsprechendes Ultraschall- oder Röntgengerät eingesetzt werden.

Besonders bevorzugt ist die Anzeigevorrichtung für den Benutzer eines Verkehrsmittels, vorzugsweise für den Fahrer eines Kraftfahrzeug, ausgelegt, wobei die Kamera derart positioniert ist, dass sie Bereiche der Umgebung erfasst, die für den Benutzer ansonsten nicht sichtbar da beispielsweise verdeckt sind, und wobei die Anzeigevorrichtung weiter vorzugsweise derart eingerichtet ist, dass sie aus dem Bild der Stereo-Kamera ein stereoskopisches Bild aus dem Blickwinkel des Benutzers berechnet, so dass sich für den Benutzer das reale Bild der Umgebung mit dem virtuellen Bild zu einem erweiterten Bild des Verkehrsgeschehens ergänzt. Bei dieser Ausführungsform ist es beispielsweise möglich, den Bereich der Umgebung, der sich aus Sicht des Fahrers eines Personenkraftwagens hinter der A-Säule befindet, durch die Kamera zu erfassen und das Bild der Kamera so umzurechnen und dem Fahrer als virtuelles Bild in das Blickfeld einzublenden, dass der Fahrer durch die A-Säule hindurchsehen kann. Gleiches gilt beispielsweise auch für die Motorhaube oder die B-Säule bzw. C-Säule. Vorzugsweise werden die Bereiche, die der Benutzer direkt sieht, aus dem virtuellen Bild herausgerechnet, so dass in diesen Bereichen keine störende Überlagerung des direkten Seheindrucks mit dem virtuellen Bild stattfindet.

In einer weiteren Ausführungsform der vorliegenden Erfindung kann es sich bei der Kamera um eine Infrarotkamera handeln. Bei dieser Ausführungsform kann die Sichtweite bei schlechten Sichtverhältnissen, z.B. Nacht/Nebel/Regen erheblich erweitert werden.

In einer weiteren bevorzugten Ausführungsform der vorliegenden Erfindung weist die Anzeigevorrichtung ein Photometer zur Messung der Umgebungshelligkeit auf. Dadurch kann die Helligkeit des virtuellen Bildes an die Umgebungshelligkeit angepasst werden.

Im Folgenden werden Ausführungsbeispiele der vorliegenden Erfindung anhand von Zeichnungen erläutert.

Es zeigen:
- Figur 1:: die Brille einer erfindungsgemäßen Anzeigevorrichtung gemäß einem ersten Ausführungsbeispiel in einer perspektivischen Ansicht,
- Figur 2:: die Brille aus Figur 1 in einer Seitenansicht mit einer schematisch dargestellten externen Projektionseinrichtung,
- Figur 3:: ein Kraftfahrzeug in Seitenansicht mit der erfindungsgemäßen Anzeigevorrichtung gemäß dem ersten Ausführungsbeispiel,
- Figur 4:: eine Seitenansicht der Brille einer erfindungsgemäßen Anzeigevorrichtung gemäß einem zweiten Ausführungsbeispiel mit hinterleuchtetem LCD-Display,
- Figur 5:: eine Seitenansicht der Brille einer erfindungsgemäßen Anzeigevorrichtung gemäß einem dritten Ausführungsbeispiel, und
- Figur 6:: eine Seitenansicht der Brille einer erfindungsgemäßen Anzeigevorrichtung gemäß einem vierten Ausführungsbeispiel.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen. Ferner wird darauf hingewiesen, dass die Figuren schematischer Natur sind und lediglich zur Erläuterung der Erfindung dienen.

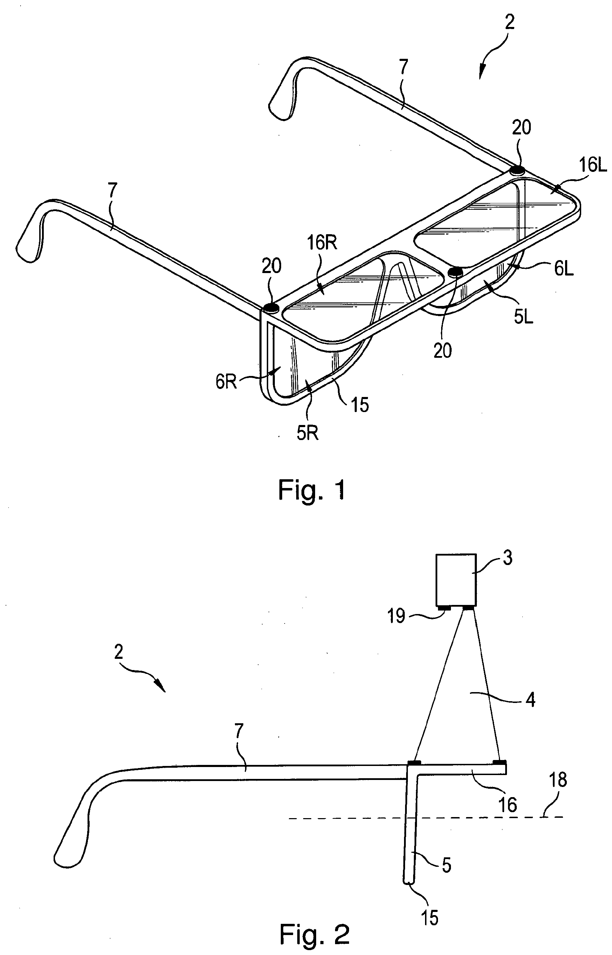

Figur 1 zeigt eine perspektivische Ansicht einer Brille 2 einer erfindungsgemäßen Anzeigevorrichtung gemäß einem ersten Ausführungsbeispiel. Die Brille 2 weist ein herkömmliches Gestell 15 sowie zwei Bügel 7 auf. In das Gestell 15 sind das linke Glas 6L und das rechte Glas 6R eingesetzt. Die beiden Gläser sind jeweils mit einer holographischen Abbildungsoptik 5L bzw. 5R beschichtet, deren Funktion nachfolgend erläutert wird. Bei dem Ausführungsbeispiel in den Figuren 1 und 2 ist die holographische Abbildungsoptik 5 als Transmissionshologramm ausgeführt. Am oberen Ende des Gestells steht ein zusätzlicher Rahmen vor, in den zwei Mattscheiben 16L und 16R eingesetzt sind, sodass pro Glas jeweils eine Mattscheibe vorgesehen ist.

Wie aus Figur 2 hervorgeht, liegen die Mattscheiben 16 in einer Ebene, die im Wesentlichen parallel zur Sehachse 18 ausgerichtet ist. Dadurch und aufgrund der Anordnung der Mattscheiben im oberen Bereich des Gestells und damit am oberen Ende des Blickfelds des Benutzers werden die Mattscheiben für den Benutzer nicht als störend empfunden.

Wie ebenfalls aus Figur 2 hervorgeht, umfasst die erfindungsgemäße Anzeigevorrichtung ferner eine Projektionseinrichtung 3, die bei dem dargestellten Ausführungsbeispiel als externer Beamer ausgeführt ist. Die vom Beamer 3 erzeugten Lichtstrahlen 4 treffen von oben auf die Mattscheibe 16. Das Licht wird durch die Mattscheibe gestreut und trifft in weiterer Folge auf die holographische Abbildungsoptik 5, von der das Licht in den Strahlengang überführt wird, der für den Benutzer ein virtuelles Bild erzeugt. Ein bedeutender Vorteil der vorliegenden Erfindung ist es, dass die Umwelt für den Benutzer direkt sichtbar bleibt und das virtuelle Bild lediglich der Realität überlagert wird.

Damit dem Benutzer stets die richtige Bildinformation eingeblendet wird, wenn der Benutzer seinen Kopf bewegt, müssen Position und Ausrichtung der Brille erfasst werden. Zu diesem Zweck weist das Gestell 15 der Brille 2 im oberen Bereich zumindest drei Referenzpunkte 20 auf, die von der in Figur 2 schematisch dargestellten Kamera 19 eines Trackers erfasst werden können.

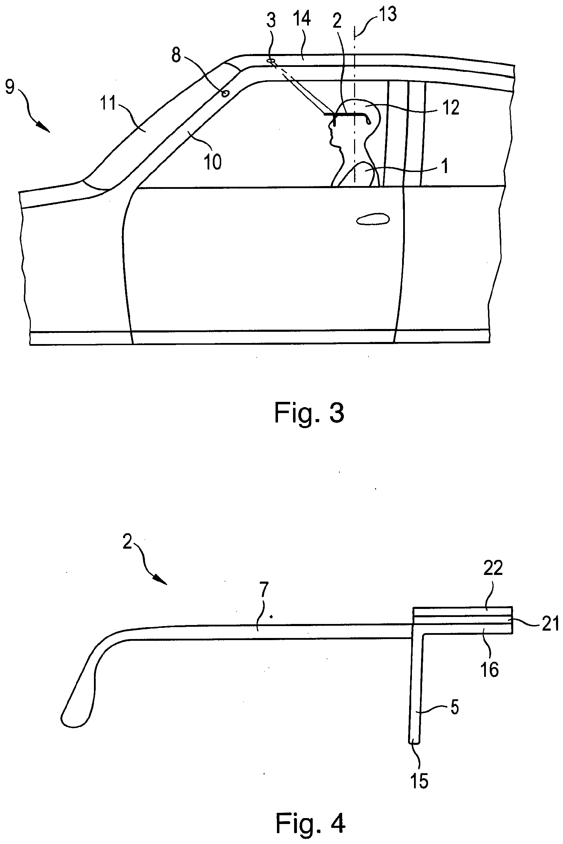

Figur 3 zeigt einen Anwendungsfall der Brille aus den Figuren 1 und 2. Die Brille 2 ist hier Teil einer erfindungsgemäßen Anzeigevorrichtung, die in ein Kraftfahrzeug 9 integriert ist. In Figur 3 richtet der Fahrer 1 seinen Blick durch die Windschutzscheibe 11 des Kraftfahrzeugs 9 hindurch geradeaus auf das Verkehrsgeschehen. Bei einer rein realen Wahrnehmung der Umgebung werden gewisse Bereiche des Verkehrsgeschehens dabei durch die A-Säule 10 des Kraftfahrzeugs 9 verdeckt. Um diese Bereiche für den Fahrer sichtbar zu machen, ist in der A-Säule 10 eine Kamera 8 vorgesehen, deren Bild mittels einer entsprechenden Recheneinheit aus dem Blickwinkel des Fahrers 1 umgerechnet und dem Fahrer als virtuelles Bild in sein Blickfeld eingeblendet wird. Als Projektionseinrichtung kommt ein Beamer 3 zum Einsatz, der in den Dachhimmel 14 des Fahrzeuginnenraums integriert ist. An dieser Stelle wird nochmals darauf hingewiesen, dass die Darstellungen lediglich schematischer Natur sind. Die Kamera 8 ist vorzugsweise als Stereokamera ausgeführt, damit dem Fahrer eine entsprechende dreidimensionale Darstellung des Bereichs hinter der A-Säule eingeblendet werden kann. Ferner wird darauf hingewiesen, dass die Kamera 8 in der A-Säule angeordnet werden muss.

Bei dem gezeigten Ausführungsbeispiel kann der Fahrer seinen Kopf 12 um die Hochachse 13 um etwa 180° drehen. Der entsprechende Bildausschnitt, der vom Beamer 3 auf die Mattscheibe der Brille projiziert wird, kann entsprechend nachgeführt werden, oder das Bild deckt den ganzen Bewegungsraum ab, sodass kein Tracking notwendig ist. Position und Ausrichtung der Brille werden dazu von einem nicht näher dargestellten Tracker erfasst. Alternativ ist wie bereits beschrieben auch denkbar, entsprechende Bewegungssensoren in der Brille 2 vorzusehen.

Anstatt des in den Figuren 2 und 3 dargestellten Beamers kann auch eine andere Projektionseinrichtung zur Erzeugung der Lichtstrahlen zum Einsatz kommen. Figur 4 zeigt hierzu ein weiteres Ausführungsbeispiel. Die Darstellung entspricht im Wesentlichen der Darstellung aus Figur 2. Die Brille einer erfindungsgemäßen Anzeigevorrichtung ist hier wieder in Seitenansicht dargestellt. Anstatt des in Figur 2 schematisch eingezeichneten Beamer 3 ist hier ein LCD-Display 21 mit entsprechender LED-Hinterleuchtung 22 vorgesehen. Die aus LCD-Display und LED-Hinterleuchtung bestehende Projektionseinrichtung ist als Einheit direkt über der Mattscheibe 16 angeordnet und fest mit dem Gestell 15 der Brille 2 verbunden. Bei diesem Ausführungsbeispiel ist die Brille 2 zwar etwas schwerer, der Benutzer ist jedoch in keinster Weise eingeschränkt in seiner Bewegungsfreiheit. Damit dem Benutzer der richtige Bildausschnitt des virtuellen Bildes eingeblendet wird, müssen Position und Ausrichtung der Brille erfasst werden. Auch hier kann eine passive Erfassung mittels entsprechender Referenzpunkte auf der Brille und einem entsprechenden Kamerasystem erfolgen. Alternativ können geeignete Sensoren in der Brille vorgesehen sein.

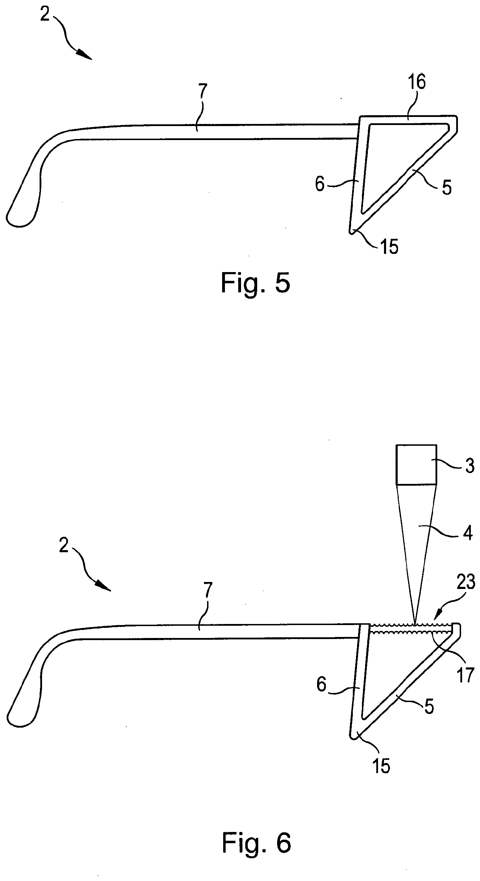

Figur 5 zeigt eine Seitenansicht einer Brille gemäß einem weiteren Ausführungsbeispiel. Im Unterschied zu dem Gestell aus Figur 2 ist hier eine dritte Ebene vorgesehen, die sich vom vorderen Ende der Mattscheibe 16 etwa im 45° Winkel bis zum unteren Ende des Brillenglases 6 erstreckt. In dieser Ebene liegt bei diesem Ausführungsbeispiel die holographische Abbildungsoptik 5. Im Gegensatz zu dem Ausführungsbeispiel aus Figur 2 ist die holographische Abbildungsoptik nicht als Transmission- sondern als Reflexionshologramm ausgeführt. Das Hologramm kann auf eine transparente Scheibe aufgebracht sein. Es wird darauf hingewiesen, dass bei diesem Ausführungsbeispiel prinzipiell auch auf das Brillenglas 6 verzichtet werden kann. Die Bilderzeugung kann auf mehrere Arten, insbesondere wie in Figur 2 oder wie in Figur 4, erfolgen.

Figur 6 zeigt eine Abwandlung, bei der die Mattscheibe 16 durch ein Linsenarray 17 ersetzt ist. Für eine besonders leichte Ausführung der Brille wird das Linsenarray 17 aus Kunststoff ausgeführt. Bei diesem Ausführungsbeispiel kommt ferner ein Beamer 3 zum Einsatz, der ein Bild auf das Linsenarray 17 projiziert. Die Bildebene 23 befindet sich somit auf dem Linsenarray 17.

## Patentansprüche

1. Anzeigevorrichtung zur Einblendung eines virtuellen Bildes in das Blickfeld eines Benutzers (1) der Anzeigevorrichtung, mit einer Brille (2) für den Benutzer und zumindest einer Projektionseinrichtung (3) zur Erzeugung von Lichtstrahlen (4), die mittels einer Optik der Brille in einen Strahlengang überführt werden, der das virtuelle Bild für den Benutzer erzeugt, wobei die Optik eine Mattscheibe (16) und eine holographische Abbildungsoptik (5) umfasst, wobei Mattscheibe und holographische Abbildungsoptik derart angeordnet sind, dass die von der Projektionseinrichtung erzeugten Lichtstrahlen durch die Mattscheibe hindurch auf die holographische Abbildungsoptik treffen und von dieser in den Strahlengang überführt werden, der das virtuelle Bild für den Benutzer erzeugt, wobei die Mattscheibe (16) im oberen Bereich der Brille (2) angeordnet ist, so dass sich die Mattscheibe am oberen Ende des Blickfelds des Benutzers befindet, und wobei die Mattscheibe (16) zu einer Ebene der holographischen Abbildungsoptik (5) einen Winkel von zumindest 45 Grad einschließt, wobei die holographische Abbildungsoptik transparent ist, in der nullten Ordnung nicht aktiv ist, und dem Benutzer daher eine ungehinderte und direkte Wahrnehmung seiner Umgebung ermöglicht.

2. Anzeigevorrichtung zur Einblendung eines virtuellen Bildes in das Blickfeld eines Benutzers (1) der Anzeigevorrichtung, mit einer Brille (2) für den Benutzer und zumindest einer Projektionseinrichtung (3) zur Erzeugung von Lichtstrahlen (4), die mittels einer Optik der Brille in einen Strahlengang überführt werden, der das virtuelle Bild für den Benutzer erzeugt, wobei die Optik ein Linsenarray (17) und eine holographische Abbildungsoptik (5) umfasst, wobei Linsenarray und holographische Abbildungsoptik derart angeordnet sind, dass die von der Projektionseinrichtung erzeugten Lichtstrahlen durch das Linsenarray hindurch auf die holographische Abbildungsoptik treffen und von dieser in den Strahlengang überführt werden, der das virtuelle Bild für den Benutzer erzeugt, wobei das Linsenarray (17) im oberen Bereich der Brille (2) angeordnet ist, so dass sich das Linsenarray am oberen Ende des Blickfelds des Benutzers befindet, wobei das Linsenarray (17) zu einer Ebene der holographischen Abbildungsoptik (5) einen Winkel von zumindest 45 Grad einschließt, wobei die holographische Abbildungsoptik transparent ist, in der nullten Ordnung nicht aktiv ist, und dem Benutzer daher eine ungehinderte und direkte Wahrnehmung seiner Umgebung ermöglicht.

3. Anzeigevorrichtung nach Anspruch 1 oder 2, **dadurch gekennzeichnet, dass** die Mattscheibe (16) beziehungsweise das Linsenarray (17) bei aufrechter Kopfhaltung des Benutzers im Wesentlichen horizontal ausgerichtet ist.

4. Anzeigevorrichtung nach einem der Ansprüche 1 bis 3, **dadurch gekennzeichnet, dass** die holographische Abbildungsoptik (5) ein Reflexionshologramm aufweist und derart angeordnet ist, dass die Lichtstrahlen (4) durch die Mattscheibe (16) beziehungsweise das Linsenarray (17) hindurch auf die holographische Abbildungsoptik (5) treffen und von dieser reflektiert und dabei in den Strahlengang überführt werden, der das virtuelle Bild für den Benutzer erzeugt.

5. Anzeigevorrichtung nach Anspruch 4, **dadurch gekennzeichnet, dass** die Mattscheibe (16) eine holographische Mattscheibe mit Vorzugslichtaustrittsrichtung ist.

6. Anzeigevorrichtung nach einem der Ansprüche 1 bis 3, **dadurch gekennzeichnet, dass** die holographische Abbildungsoptik (5) ein Transmissionshologramm aufweist, wobei die Mattscheibe (16) eine holographische Mattscheibe mit Vorzugslichtaustrittsrichtung ist, so dass die Lichtstrahlen (4) von der Mattscheibe überwiegend auf die holographische Abbildungsoptik gelenkt werden.

7. Anzeigevorrichtung nach Anspruch 6, **dadurch gekennzeichnet, dass** die holographische Abbildungsoptik (5) zumindest drei monochrome Transmissionshologramme für Licht unterschiedlicher Wellenlänge aufweist, wobei die zumindest drei monochromen Transmissionshologramme hintereinander oder ineinander angeordnet sind.

8. Anzeigevorrichtung nach einem der Ansprüche 1 bis 7, **dadurch gekennzeichnet, dass** die Projektionseinrichtung (3) unabhängig von der Brille als externer Beamer ausgeführt ist.

9. Anzeigevorrichtung nach Anspruch 8, **dadurch gekennzeichnet, dass** die Anzeigevorrichtung einen Tracker zur Erfassung von Position und Ausrichtung der Brille (2) aufweist, wobei die Anzeigevorrichtung derart eingerichtet ist, dass sich das vom Beamer erzeugte Bild in Abhängigkeit der Position und Ausrichtung der Brille (2) ändert.

10. Anzeigevorrichtung nach Anspruch 9, **dadurch gekennzeichnet, dass** die Anzeigevorrichtung derart eingerichtet ist, dass ein vorzugsweise auf die Mattscheibe (16) beziehungsweise das Linsenarray (17) begrenzter Bildausschnitt mit der Mattscheibe beziehungsweise das Linsenarray mitwandert.

11. Anzeigevorrichtung nach einem der Ansprüche 9 bis 10, **dadurch gekennzeichnet, dass** der Tracker eine Kamera (19) aufweist, wobei die Brille mit Referenzpunkten (20) versehen ist, die von der Kamera (19) erfassbar sind.

12. Anzeigevorrichtung nach einem der Ansprüche 1 und 3 bis 7, **dadurch gekennzeichnet, dass** die Projektionseinrichtung ein LCD-Display (21) aufweist, das vorzugsweise direkt über der Mattscheibe (16) angeordnet und fest mit der Brille (2) verbunden ist.

13. Anzeigevorrichtung nach Anspruch 12, **dadurch gekennzeichnet, dass** die Brille (2) schmalbandige LEDs (22) oder Laserlichtquellen zur Hinterleuchtung des LCD-Displays aufweist.

14. Anzeigevorrichtung nach Anspruch 12, **dadurch gekennzeichnet, dass** die Projektionseinrichtung (3) eine unabhängig von der Brille vorgesehene, externe Beleuchtung für das LCD-Display (21) aufweist.

15. Anzeigevorrichtung nach einem der vorstehenden Ansprüche, **dadurch gekennzeichnet, dass** die Anzeigevorrichtung eine Kamera (8) oder eine geeignete alternative Bildaufnahmevorrichtung umfasst, deren Bild in bearbeiteter oder unbearbeiteter Form als virtuelles Bild in das Blickfeld des Benutzers einblendbar ist, wobei die Kamera (8) vorzugsweise als Stereokamera ausgeführt ist.

16. Anzeigevorrichtung nach Anspruch 15, **dadurch gekennzeichnet, dass** die Anzeigevorrichtung für den Benutzer eines Verkehrsmittels, vorzugsweise für den Fahrer eines Kraftfahrzeugs (9), ausgelegt ist, wobei die Kamera (8) derart positioniert ist, dass sie Bereiche der Umgebung erfasst, die für den Benutzer ansonsten nicht sichtbar da beispielsweise verdeckt sind, und wobei die Anzeigevorrichtung weiter vorzugsweise derart eingerichtet ist, dass sie aus dem Bild der Stereo-Kamera (8) ein stereoskopisches Bild aus dem Blickwinkel des Benutzers berechnet, so dass sich für den Benutzer das reale Bild der Umgebung mit dem virtuellen Bild zu einem erweiterten Bild des Verkehrsgeschehens ergänzt.

## Claims

1. Display apparatus for superimposing a virtual image into the field of vision of a user (1) of the display apparatus, comprising spectacles (2) for the user and at least one projection device (3) for producing light rays (4) which are transferred by means of an optical unit of the spectacles into a beam path which produces the virtual image for the user, wherein the optical unit comprises a ground-glass screen (16) and a holographic optical imaging unit (5), wherein the ground-glass screen and the holographic optical imaging unit are arranged in such a way that the light rays produced by the projection device are incident on the holographic optical imaging unit through the ground-glass screen and are transferred from said holographic optical imaging unit into the beam path which produces the virtual image for the user, wherein the ground-glass screen (16) is arranged in the upper region of the spectacles (2) so that the ground-glass screen is located at the upper end of the field of vision of the user, and wherein the ground-glass screen (16) encloses an angle of at least 45 degrees to a plane of the holographic optical imaging unit (5), wherein the holographic optical imaging unit is transparent and inactive in the zero order and therefore enables the user to perceive his surroundings unhindered and directly.

2. Display apparatus for superimposing a virtual image into the field of vision of a user (1) of the display apparatus, comprising spectacles (2) for the user and at least one projection device (3) for producing light rays (4) which are transferred by means of an optical unit of the spectacles into a beam path which produces the virtual image for the user, wherein the optical unit comprises a lens array (17) and a holographic optical imaging unit (5), wherein the lens array and the holographic optical imaging unit are arranged in such a way that the light rays produced by the projection device are incident on the holographic optical imaging unit through the lens array and are transferred by said holographic optical imaging unit into the beam path which produces the virtual image for the user, wherein the lens array (17) is arranged in the upper region of the spectacles (2) so that the lens array is located at the upper end of the field of vision of the user, and wherein the lens array (17) encloses an angle of at least 45 degrees to a plane of the holographic optical imaging unit (5), wherein the holographic optical imaging unit is transparent and inactive in the zero order and therefore enables the user to perceive his surroundings unhindered and directly.

3. Display apparatus according to claim 1 or 2, **characterized in that** the ground-glass screen (16) or the lens array (17), respectively, is oriented substantially horizontally with the user's head held upright.

4. Display apparatus according to one of claims 1 to 3, **characterized in that** the holographic optical imaging unit (5) comprises a reflection hologram and is arranged in such a way that the light rays (4) are incident on the holographic optical imaging unit (5) through the ground-glass screen (16) or the lens array (17), respectively, and are reflected by said holographic optical imaging unit (5) and, thereby, are transferred into the beam path which produces the virtual image for the user.

5. Display apparatus according to claim 4, **characterized in that** the ground-glass screen (16) is a holographic ground-glass screen with a preferential light-emitting direction.

6. Display apparatus according to one of claims 1 to 3, **characterized in that** the holographic optical imaging unit (5) comprises a transmission hologram, wherein the ground-glass screen (16) is a holographic ground-glass screen with preferential light-emitting direction so that the light rays (4) from the ground-glass screen are directed predominantly onto the holographic optical imaging unit.

7. Display apparatus according to claim 6, **characterized in that** the holographic optical imaging unit (5) comprises at least three monochrome transmission holograms for light of different wavelengths, wherein the at least three monochrome transmission holograms are arranged one behind the other or one inside the other.

8. Display apparatus according to one of claims 1 to 7, **characterized in that** the projection device (3) is configured as an external beamer independently of the spectacles.

9. Display apparatus according to claim 8, **characterized in that** the display apparatus comprises a tracker for detecting the position and orientation of the spectacles (2), wherein the display apparatus is adapted in such a way that the image produced by the beamer changes depending on the position and orientation of the spectacles (2).

10. Display apparatus according to claim 9, **characterized in that** the display apparatus is adapted in such a way that an image section which is preferably limited to the ground-glass screen (16) or the lens array (17) moves with the ground-glass screen or the lens array.

11. Display apparatus according to any of claims 9 to 10, **characterized in that** the tracker comprises a camera (19), wherein the spectacles are provided with reference points (20) which can be detected by the camera (19).

12. Display apparatus according to one of claims 1 and 3 to 7, **characterized in that** the projection device comprises an LCD display (21) which is preferably arranged directly above the ground-glass screen (16) and is securely connected to the spectacles (2).

13. Display apparatus according to claim 12, **characterized in that** the spectacles (2) have narrow-band LEDs (22) or laser light sources for backlighting the LCD display.

14. Display apparatus according to claim 12, **characterized in that** the projection device (3) has an external illumination for the LCD display (21) provided independently of the spectacles.

15. Display apparatus according to one of the preceding claims, **characterized in that** the display apparatus comprises a camera (8) or a suitable alternative image capturing device, the image of which, in processed or unprocessed form, can be superimposed as a virtual image into the field of vision of the user, wherein the camera (8) is preferably configured as a stereo camera.

16. Display apparatus according to claim 15, **characterized in that** the display apparatus is designed for the user of a transport means, preferably for the driver of a motor vehicle (9), wherein the camera (8) is positioned such that it detects areas of the surroundings which are not otherwise visible to the user, for example, because they are concealed, and wherein the display apparatus is further preferably adapted such that it calculates a stereoscopic image from the user's perspective from the image of the stereo camera (8) so that for the user, the real image of the surroundings is complemented with the virtual image to form an expanded image of the traffic situation so that for the user, the virtual image of the surroundings is complemented to form an expanded image of the traffic situation.

## Revendications

1. Dispositif indicateur permettant l'incrustation d'une image virtuelle dans le champ de vision d'un utilisateur (1) du dispositif indicateur, comprenant une paire de lunettes (2) destinée à l'utilisateur et au moins un dispositif de projection (3) permettant de générer des rayons lumineux (4) qui sont transmis au moyen d'un système optique de la paire de lunettes selon un chemin optique qui génère l'image virtuelle pour l'utilisateur, dans lequel le système optique comprend un verre dépoli (16) et un système optique d'imagerie holographique (5), dans lequel le verre dépoli et le système optique d'imagerie holographique sont agencés de telle manière que les rayons lumineux générés par le dispositif de projection aboutissent, après avoir traversé le verre dépoli, sur le système optique d'imagerie holographique et sont transmis par celui-ci selon le chemin optique qui génère l'image virtuelle pour l'utilisateur, dans lequel le verre dépoli (16) est agencé dans la région supérieure de la paire de lunettes (2) de sorte que le verre dépoli se trouve au niveau de l'extrémité supérieure du champ de vision de l'utilisateur, et dans lequel le verre dépoli (16) forme un angle d'au moins 45 degrés par rapport à un plan du système optique d'imagerie holographique (5), dans lequel le système optique d'imagerie holographique est transparent, n'est pas actif dans l'ordre 0, et permet ainsi à l'utilisateur de percevoir son environnement directement et sans entraves.

2. Dispositif indicateur permettant l'incrustation d'une image virtuelle dans le champ de vision d'un utilisateur (1) du dispositif indicateur, comprenant une paire de lunettes (2) destinée à l'utilisateur et au moins un dispositif de projection (3) permettant de générer des rayons lumineux (4) qui sont transmis au moyen d'un système optique de la paire de lunettes selon un chemin optique qui génère l'image virtuelle pour l'utilisateur, dans lequel le système optique comprend un réseau de lentilles (17) et un système optique d'imagerie holographique (5), dans lequel le réseau de lentilles et le système optique d'imagerie holographique sont agencés de telle manière que les rayons lumineux générés par le dispositif de projection aboutissent, après avoir traversé le réseau de lentilles, sur le système optique d'imagerie holographique et sont transmis par celui-ci selon le chemin optique qui génère l'image virtuelle pour l'utilisateur, dans lequel le réseau de lentilles (17) est agencé dans la région supérieure de la paire de lunettes (2) de sorte que le réseau de lentilles se trouve au niveau de l'extrémité supérieure du champ de vision de l'utilisateur, dans lequel le réseau de lentilles (17) forme un angle d'au moins 45 degrés par rapport à un plan du système optique d'imagerie holographique (5), dans lequel le système optique d'imagerie holographique est transparent, n'est pas actif dans l'ordre 0, et permet ainsi à l'utilisateur de percevoir son environnement directement et sans entraves.

3. Dispositif indicateur selon la revendication 1 ou 2, **caractérisé en ce que** le verre dépoli (16) ou le réseau de lentilles (17) est orienté de manière essentiellement horizontale lorsque la tête de l'utilisateur se trouve en position verticale.

4. Dispositif indicateur selon l'une quelconque des revendications 1 à 3, **caractérisé en ce que** le système optique d'imagerie holographique (5) présente un hologramme de réflexion et est agencé de telle manière que les rayons lumineux (4) aboutissent, après avoir traversé le verre dépoli (16) ou le réseau de lentilles (17), sur le système optique d'imagerie holographique (5) et sont réfléchis par celui-ci et sont ainsi transmis selon le chemin du rayon lumineux qui génère l'image virtuelle pour l'utilisateur.

5. Dispositif indicateur selon la revendication 4, **caractérisé en ce que** le verre dépoli (16) est un verre dépoli holographique avec une direction de sortie de lumière privilégiée.

6. Dispositif indicateur selon l'une quelconque des revendications 1 à 3, **caractérisé en ce que** le système optique d'imagerie holographique (5) présente un hologramme de transmission, dans lequel le verre dépoli (16) est un verre dépoli holographique avec une direction de sortie de lumière privilégiée de sorte que les rayons lumineux (4) sont déviés par le verre dépoli principalement sur le système optique d'imagerie holographique.

7. Dispositif indicateur selon la revendication 6, **caractérisé en ce que** le système optique d'imagerie holographique (5) présente au moins trois hologrammes de transmission monochromes pour de la lumière de longueurs d'onde différentes, dans lequel les au moins trois hologrammes de transmission monochromes sont agencés les uns derrière les autres ou les uns dans les autres.

8. Dispositif indicateur selon l'une quelconque des revendications 1 à 7, **caractérisé en ce que** le dispositif de projection (3) est réalisé indépendamment de la paire de lunettes sous la forme d'un projecteur externe.

9. Dispositif indicateur selon la revendication 8, **caractérisé en ce que** le dispositif indicateur présente un traqueur permettant de détecter la position et l'orientation de la paire de lunettes (2), dans lequel le dispositif indicateur est conçu de telle manière que l'image générée par le projecteur change en fonction de la position et de l'orientation de la paire de lunettes (2).

10. Dispositif indicateur selon la revendication 9, **caractérisé en ce que** le dispositif indicateur est conçu de telle manière qu'une section d'image, de manière préférée limitée au verre dépoli (16) ou au réseau de lentilles (17), migre avec le verre dépoli ou le réseau de lentilles.

11. Dispositif indicateur selon la revendication 9 ou 10, **caractérisé en ce que** le traqueur présente une caméra (19), dans lequel la paire de lunettes est munie de points de référence (20) pouvant être détectés par la caméra (19).

12. Dispositif indicateur selon l'une quelconque des revendications 1 et 3 à 7, **caractérisé en ce que** le dispositif de projection présente un affichage à cristaux liquides (21) qui est agencé de manière préférée directement au-dessus du verre dépoli (16) et qui est relié de manière fixe à la paire de lunettes (2).

13. Dispositif indicateur selon la revendication 12, **caractérisé en ce que** la paire de lunettes (2) présente des LED à bande étroite (22) ou des sources lumineuses laser permettant le rétroéclairage de l'affichage à cristaux liquides.

14. Dispositif indicateur selon la revendication 12, **caractérisé en ce que** le dispositif de projection (3) présente un éclairage externe fourni indépendamment de la paire de lunettes et destiné à l'affichage à cristaux liquides (21).

15. Dispositif indicateur selon l'une quelconque des revendications précédentes, **caractérisé en ce que** le dispositif indicateur comprend une caméra (8) ou un autre dispositif d'enregistrement d'image approprié, dont l'image, sous une forme traitée ou non traitée, peut être incrustée dans le champ de vision de l'utilisateur sous la forme d'une image virtuelle, dans lequel la caméra (8) est de manière préférée réalisée sous la forme d'une caméra stéréo.

16. Dispositif indicateur selon la revendication 15, **caractérisé en ce que** le dispositif indicateur est conçu pour l'utilisateur d'un moyen de transport, de manière préférée pour le conducteur d'un véhicule automobile (9), dans lequel la caméra (8) est positionnée de telle manière qu'elle détecte des régions de l'environnement qui ne sont pas visibles par ailleurs pour l'utilisateur, par exemple parce qu'elles sont occultées, et dans lequel le dispositif indicateur est en outre de manière préférée conçu de telle manière qu'il calcule une image stéréoscopique à partir de l'image de la caméra stéréoscopique (8) en se basant sur l'angle de vision de l'utilisateur, de sorte que, pour l'utilisateur, l'image réelle de l'environnement se complète avec l'image virtuelle pour former une image étendue de l'événement de circulation.
